(19) Europäisches Patentamt
European Patent Office
Office européen des brevets

(11) **EP 4 459 719 A1**

(12) **EUROPEAN PATENT APPLICATION**
published in accordance with Art. 153(4) EPC

(43) Date of publication:
**06.11.2024 Bulletin 2024/45**

(21) Application number: **21969346.2**

(22) Date of filing: **28.12.2021**

(51) International Patent Classification (IPC):
**H01M 4/62** (2006.01) **H01M 4/13** (2010.01)

(52) Cooperative Patent Classification (CPC):
**H01M 4/13; H01M 4/62;** Y02E 60/10

(86) International application number:
**PCT/CN2021/142111**

(87) International publication number:
**WO 2023/122967 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Kureha Corporation
Chuo-ku
Tokyo 103-8552 (JP)**
• **Kureha (China) Investment Co., Ltd
Shanghai 200126 (CN)**

• **Kureha (Changshu) Fluoropolymers Co., Ltd
Changshu, Jiangsu 215522 (CN)**

(72) Inventors:
• **AOKI, Kenta
Shanghai 200126 (CN)**
• **YU, Fei
Shanghai 200126 (CN)**
• **SATO, Hiroshi
Tokyo 103--8552 (JP)**

(74) Representative: **Zimmermann & Partner
Patentanwälte mbB
Postfach 330 920
80069 München (DE)**

(54) **ADHESIVE, ELECTRODE COMPOSITION, AND ELECTRODE**

(57) An adhesive of the present invention satisfies the following requirements: the turbidity is 5.0 or less; the dissolution rate of the adhesive is 10% or more and 70% or less; the logarithmic viscosity number of a dissolved component of an adhesive solution is 0.5 dL/g or more and less than 2.5 dL/g; A1735 cm-1/A3025 cm-1 of the dissolved component of the adhesive solution is 0.20 or more and 0.80 or less; and the logarithmic viscosity number of the adhesive is greater than that of the dissolved component of the adhesive solution.

**Description**

TECHNICAL FIELD

The present invention relates to an adhesive, an electrode composition, and an electrode.

BACKGROUND

Electrodes for non-aqueous electrolyte secondary batteries are required to have high capacity. For example, the amount of an adhesive in an electrode can be reduced by using an adhesive (binder) having high binding properties. In addition, since the amount of an active material can be increased as the amount of the adhesive in the electrode decreases, the capacity of the non-aqueous electrolyte secondary battery can be increased.

At present, as the above adhesive, a vinylidene fluoride polymer mainly containing a repeating unit derived from vinylidene fluoride (VDF) is mainly used.

As an example of such adhesives, a vinylidene fluoride polymer obtained by copolymerizing vinylidene fluoride with a specific compound is recited in Patent Document 1. Further, it is recited that the vinylidene fluoride polymer has excellent adhesion to a metal foil.

PRIOR ART LITERATURE

Patent Literature

Patent Literature 1: International Publication No. 2012/090876

SUMMARY

Problems to be Solved by the Invention

In order to increase the capacity of a non-aqueous electrolyte secondary battery, a method for increasing the thickness of an electrode to increase the amount of an active material loaded on the electrode has also been performed. When an electrode having an increased thickness is produced using the vinylidene fluoride polymer as recited in Patent Literature 1, the electrode tends to be hard. For example, when the electrode is deformed by winding or the like so as to be accommodated in a cylindrical cannister body, or when the electrode is deformed by applying pressure to the wound electrode so as to be accommodated in a square cannister body, the electrode may be broken and/or the current collector may be broken.

In addition, the slurry viscosity of an electrode composition comprising the vinylidene fluoride polymer as recited in Patent Literature 1 tends to increase, and the viscosity of the vinylidene fluoride polymer may increase at the stage of coating on a current collector. When the viscosity of the electrode composition is high, it may cause problems such as operational problems during production of a battery.

Therefore, further improvement of vinylidene fluoride polymers for adhesives has been demanded.

The present invention has been made in view of the above problems, and it is an objective of the present invention to provide an adhesive capable of suppressing an increase in viscosity of a slurry of an electrode composition and imparting flexibility to an electrode.

TECHNICAL SOLUTION

As a result of intensive studies, the present inventors have found from the results thereof that an electrode having flexibility can be obtained by enabling an adhesive to satisfy specified requirements. Further, it has been found that suppression of an increase in the slurry viscosity of an electrode composition comprising the adhesive is obtained, thereby completing the present invention.

An adhesive according to one form of the present invention is an adhesive containing at least one vinylidene fluoride polymer and satisfying the following requirements (A) to (E):

(A) the turbidity at 25°C of an N-methylpyrrolidone solution comprising 5 mass% of the adhesive is 5.0 or less;

(B) the dissolution rate of the adhesive represented by the following formula (1) in an adhesive solution obtained by dosing 6 parts by mass of the adhesive to 94 parts by mass of a 95 mass% acetone aqueous solution and stirring at 30°C for 2 h is 10% or more and 70% or less;

dissolution rate (%) = ((amount dosed - mass of undissolved matter)/amount dosed) x 100

(C) the logarithmic viscosity number of a dissolved component of the adhesive solution is 0.5 dL/g or more and less than 2.5 dL/g;

(D) the ratio $A1735\,cm^{-1}/A3025\,cm^{-1}$ of the absorbance $A1735\,cm^{-1}$ of an infrared absorption spectrum at $1735\,cm^{-1}$ to the absorbance $A3025\,cm^{-1}$ of an infrared absorption spectrum at $3025\,cm^{-1}$ of the dissolved component of the adhesive solution is 0.20 or more and 0.80 or less; and

(E) the logarithmic viscosity number of the adhesive is greater than that of the dissolved component of the adhesive solution.

An adhesive according to one form of the present invention contains: a first vinylidene fluoride polymer having a structural unit derived from vinylidene fluoride as a main component and optionally comprising a structural unit derived from hexafluoropropylene; and a second vinylidene fluoride polymer comprising a structural unit derived from vinylidene fluoride, a structural unit derived from hexafluoropropylene, and a structural unit containing a polar functional group, wherein

the logarithmic viscosity number of the first vinylidene fluoride polymer is 2.5 dL/g or more and 6.0 dL/g or less, and the content of the structural unit derived from hexafluoropropylene in the total structural units of the first vinylidene fluoride polymer is 0 mass% or more and less than 0.5 mass%,

the logarithmic viscosity number of the second vinylidene fluoride polymer is 0.5 dL/g or more and less than 2.5 dL/g, and the content of the structural unit derived from hexafluoropropylene in the total structural units of the second vinylidene fluoride polymer is 6 mass% or more and 40 mass% or less,

the ratio $A1735\,cm^{-1}/A3025\,cm^{-1}$ of the absorbance $A1735\,cm^{-1}$ of an infrared absorption spectrum at $1735\,cm^{-1}$ to the absorbance $A3025\,cm^{-1}$ of an infrared absorption spectrum at $3025\,cm^{-1}$ of the second vinylidene fluoride polymer is 0.20 or more and 0.80 or less, and the mass ratio (second vinylidene fluoride polymer/first vinylidene fluoride polymer) of the second vinylidene fluoride polymer to the first vinylidene fluoride polymer in the adhesive is 3/7 or more and 7/3 or less.

ADVANTAGEOUS EFFECTS

The adhesive according to one form of the present invention can suppress an increase in viscosity of a slurry of an electrode composition and provide an electrode having flexibility.

DETAILED DESCRIPTION

Hereinafter, an embodiment of the present invention will be described in detail.

<Adhesive>

The adhesive of the present embodiment is an adhesive as below: an adhesive for enabling an electrode active material to bind to a current collector in an electrode formed by forming an electrode composition layer comprising the electrode active material on a current collector. The adhesive of the present embodiment contains at least one vinylidene fluoride polymer.

(Vinylidene Fluoride Polymer)

From the aspect of obtaining an electrode having flexibility, the vinylidene fluoride polymer is preferably a copolymer of a structural unit derived from vinylidene fluoride and a structural unit derived from other monomers. With respect to an electrode having flexibility, same can be evaluated according to, for example, whether the electrode is broken when a force such as bending the electrode is applied.

As the above-mentioned other monomers, there may be one or one or more. In addition, the other monomers may or may not contain fluorine. Specific examples of the other monomers include: fluorine-containing monomers (e.g.,

fluorinated ethylene, trifluoroethylene, tetrafluoroethylene, chlorotrifluoroethylene, hexafluoropropylene, and perfluoroalkyl vinyl ether), ethylene, unsaturated dibasic acid derivatives (e.g., monomethyl maleate and dimethyl maleate), vinyl acetate, (meth)acrylamide, (meth)dimethylacrylamide, allyl glycidyl ether, alkyl (meth)acrylate compounds (e.g., methyl (meth)acrylate), carboxyl-containing acrylate compounds (e.g., (meth)acrylic acid, 2-carboxyethyl acrylate, (meth) acryloyloxypropyl succinate, (meth)acryloyloxyethyl succinate, 2-hydroxyethyl acrylate, and hydroxypropyl acrylate).

Considering from the viewpoint of obtaining an electrode having flexibility, as the other monomers, a fluorine-containing monomer or a monomer containing a polar functional group is preferred. As the fluorine-containing monomer, hexafluoropropylene (HFP) is more preferred. As the monomer containing a polar functional group, unsaturated dibasic acid derivatives are more preferred. In addition, the other monomers are further preferably a monomer containing a polar functional group and HFP.

When containing the vinylidene fluoride polymer including a structural unit derived from HFP, the proportion of the structural unit derived from HFP is preferably 3 mass% or more, and more preferably 3.5 mass% or more, when the total structural units of the vinylidene fluoride polymer contained in the adhesive of the present embodiment are taken as 100 mass%. In addition, the proportion of the structural unit is preferably 15 mass% or less, and more preferably 6.5 mass% or less. If the proportion of the structural unit is within the above range, it is possible to provide an electrode which is not likely to be broken and has flexibility. Here, "the total structural units of the vinylidene fluoride polymer contained in the adhesive" means, in the case that a vinylidene fluoride polymer containing no structural unit derived from HFP is included in addition to the vinylidene fluoride polymer including the structural unit derived from HFP (that is, in the case that the adhesive includes a plurality of vinylidene fluoride polymers), the total of the structural units of all vinylidene fluoride polymers including the structural unit of the vinylidene fluoride polymer including no structural unit derived from HFP.

The proportion of each structural unit of the vinylidene fluoride polymer can be found by means of a $^1$H NMR spectrum or a $^{19}$F NMR spectrum of the vinylidene fluoride polymer or a neutralization titration.

When containing the vinylidene fluoride polymer including the structural unit derived from HFP, the proportion of the structural unit derived from HFP contained in a dissolved component of an adhesive solution (a solution obtained by dosing 6 parts by mass of an adhesive to 94 parts by mass of a 95 mass% acetone aqueous solution and stirring at 30°C for 2 h) is preferably 5 mass% or more, and more preferably 6 mass% or more, when the total structural units of the vinylidene fluoride polymer contained in the dissolved component of the adhesive solution are taken as 100 mass%. In addition, the proportion of the structural unit is preferably 40 mass% or less, and more preferably 15 mass% or less. If the proportion of the structural unit is within the above range, it is possible to provide an electrode which is not likely to be broken and has flexibility. In the present description, the adhesive solution is separately prepared using the adhesive of the present embodiment in order to show the physical properties of the adhesive of the present embodiment.

From the aspect of being able to further suppress an increase in viscosity of the slurry of the electrode composition and to provide an electrode having sufficient flexibility in which electrode breakage is not likely to occur, the proportion of the structural unit derived from HFP in the total structural units of the vinylidene fluoride polymer is preferably 3 mass% or more and 15 mass% or less, and the proportion of the structural unit derived from HFP in the total structural units of the vinylidene fluoride polymer contained in the dissolved component of the adhesive solution is preferably 5 mass% or more and 40 mass% or less.

As the vinylidene fluoride polymer, a commercially available vinylidene fluoride polymer can also be used. Examples of a method for producing the vinylidene fluoride polymer may include polymerization methods such as suspension polymerization, mini-emulsion polymerization, and solution polymerization. Among them, suspension polymerization is preferred from the viewpoint of reducing impurities.

(Physical Properties of Adhesive)

The adhesive according to the present embodiment satisfies the following requirements (A) to (E). By means of satisfying requirements (A) to (E), an increase in the viscosity of the slurry of the electrode composition can be suppressed. Further, by means of satisfying requirements (A) to (E), an electrode having flexibility can be obtained.

[Requirement (A): Turbidity of NMP Solution Including Adhesive]

Requirement (A): The adhesive of the present embodiment has a turbidity of 5.0 or less at 25°C in an N-methylpyrrolidone solution (NMP solution) including 5 mass% of the adhesive.

If the turbidity is more than 5.0, an increase in the viscosity of the slurry of the electrode composition cannot be suppressed. Therefore, from this viewpoint, the turbidity is preferably 4.0 or less, and more preferably 3.5 or less.

The turbidity of the adhesive can be found by means of a known method for measuring turbidity. For example, the turbidity can be measured by integrating sphere-type photoelectric photometry.

[Requirement (B): Dissolution Rate of Adhesive]

Requirement (B): The dissolution rate of the adhesive according to the present embodiment obtained by the following measurement method is 10% or more and 70% or less.

(Method for Measuring Dissolution Rate of Adhesive)

6 parts by mass of an adhesive were added to 94 parts by mass of a 95 mass% acetone aqueous solution, and the mixture was stirred at 30°C for 2 h to obtain an adhesive solution. The adhesive solution was filtered to separate undissolved matter from the dissolved solution. Then, the solvent contained in the undissolved matter was removed by drying, and the mass was measured. Then, the dissolution rate of the adhesive was calculated according to the following formula (1).

dissolution rate (%) = ((amount dosed - mass of undissolved matter)/amount dosed) x 100

In the present description, the term "dissolved component of the adhesive solution" refers to a component obtained by reprecipitating the vinylidene fluoride polymer from the dissolved solution from which undissolved matter has been removed by a treatment such as filtration of the adhesive solution.
By means of enabling the dissolution rate to be 10% or more and 70% or less, the flexibility of the electrode can be improved. From this viewpoint, the dissolution rate of the adhesive is preferably 30% or more. In addition, the dissolution rate is preferably 50% or less.

[Requirement (C): Logarithmic Viscosity Number of Dissolved Component of Adhesive Solution]

Requirement (C): the logarithmic viscosity number of the dissolved component of the adhesive solution is 0.5 dL/g or more and less than 2.5 dL/g.
By means of enabling the above logarithmic viscosity number to be 0.5 dL/g or more and less than 2.5 dL/g, an increase in the viscosity of the slurry of the electrode composition can be suppressed, and an electrode having flexibility can be provided. From this viewpoint, the logarithmic viscosity number of the dissolved component of the adhesive solution is preferably 1.0 dL/g or more. In addition, the logarithmic viscosity number is preferably 2.2 dL/g or less.
The logarithmic viscosity number can be found by using a known viscometer such as an Ubbelohde viscometer.

[Requirement (D): Ratio of IR Spectra of Dissolved Component of Adhesive Solution]

Requirement (D): the ratio A1735 cm$^{-1}$/A3025 cm$^{-1}$ of the absorbance A1735 cm$^{-1}$ of an infrared absorption spectrum (IR spectrum) at 1735 cm$^{-1}$ to the absorbance A3025 cm$^{-1}$ of an IR spectrum at 3025 cm$^{-1}$ of the dissolved component of the adhesive solution is 0.20 or more and 0.80 or less.
The absorbance of the IR spectrum at 1735 cm$^{-1}$ is the absorbance derived from the stretching vibration of the carbonyl group. The absorbance of the IR spectrum at 3025 cm$^{-1}$ is the absorbance derived from the stretching vibration of CH. Thus, A1735 cm$^{-1}$/A3025 cm$^{-1}$ becomes a measure indicating the amount of the carbonyl group present in the vinylidene fluoride polymer.
By means of enabling A1735 cm$^{-1}$/A3025 cm$^{-1}$ to be within the above range, an increase in the viscosity of the slurry of the electrode composition can be suppressed. From this point of view, A1735 cm$^{-1}$/A3025 cm$^{-1}$ is preferably 0.25 or more. In addition, A1735 cm$^{-1}$/A3025 cm$^{-1}$ is preferably 0.4 or less.
The absorbance in the IR spectrum of the dissolved component of the adhesive solution can be found by a known method using an infrared spectrophotometer, for example.

[Requirement (E): Logarithmic Viscosity Number of Adhesive]

Requirement (E): the logarithmic viscosity number of the adhesive is greater than that of the dissolved component of the adhesive solution.
By means of requirement (E), it is possible to suppress an increase in the viscosity of the slurry of the electrode composition and provide an electrode having flexibility.
The logarithmic viscosity number of the adhesive is preferably 2.0 dL/g or more, and more preferably 2.5 dL/g or more, from the viewpoint of suppressing an increase in the viscosity of the slurry of the electrode composition. In addition, the logarithmic viscosity number of the adhesive is preferably 5.0 dL/g or less, and more preferably 4.5 dL/g or less.
Preferred forms of the physical properties of the adhesive other than requirements (A) to (E) are shown below.

With respect to the adhesive of the present embodiment, it is preferable that same has at least one crystallization peak (Tc) in each of a range of 85°C or more and less than 125°C and a range of 125°C or more and 150°C or less when a first cooling measurement is performed using a differential scanning calorimeter under a condition of 10°C/min. By means of this configuration, it is possible to suppress an increase in the viscosity of the slurry of the electrode composition and provide an electrode having flexibility.

The Tc can be confirmed by the presence or absence of a peak in the DSC curve in a first cooling process when a heating/cooling cycle is carried out by a differential scanning calorimeter (DSC) under the condition of 10°C/min.

<Adhesive Containing Two or More Vinylidene Fluoride Polymers>

Another adhesive of the present embodiment contains two or more vinylidene fluoride polymers. Hereinafter, an adhesive containing two or more vinylidene fluoride polymers is sometimes referred to as a "mixed adhesive".

The mixed adhesive includes: a vinylidene fluoride polymer having vinylidene fluoride as a main component (hereinafter sometimes referred to as a first vinylidene fluoride polymer); and a copolymer of a structural unit derived from vinylidene fluoride and a structural unit derived from other monomers (hereinafter, referred to as a second vinylidene fluoride polymer), different from the first vinylidene fluoride polymer.

[First Vinylidene Fluoride Polymer]

In the present description, "having vinylidene fluoride as a main component" means that a polyvinylidene fluoride resin contains a structural unit derived from vinylidene fluoride in an amount of 50 mass% more. The vinylidene fluoride polymer having vinylidene fluoride as a main component may also be a homopolymer of vinylidene fluoride essentially containing 100 mass% of a structural unit derived from vinylidene fluoride. In addition, the vinylidene fluoride polymer having vinylidene fluoride as a main component may also optionally include a structural unit derived from HFP.

The proportion of the structural unit derived from HFP in the total structural units of the first vinylidene fluoride polymer is preferably less than 0.1 mass%, and more preferably 0.05 mass% or less. If the proportion of the structural units is within the above range, it is possible to further suppress an increase in the viscosity of the slurry of the electrode composition, and to provide an electrode having sufficient flexibility in which electrode breakage is not likely to occur.

The logarithmic viscosity number of the first vinylidene fluoride polymer is 2.5 dL/g or more, preferably 3.0 dL/g or more. In addition, the logarithmic viscosity number is 6.0 dL/g or less, preferably 4.5 dL/g or less. If the logarithmic viscosity number is within the above range, it is possible to further suppress an increase in the viscosity of the slurry of the electrode composition, and to provide an electrode having sufficient flexibility in which electrode breakage is not likely to occur.

With respect to the first vinylidene fluoride polymer, the proportion of the structural unit derived from HFP in the total structural units of the first vinylidene fluoride polymer is 0 mass% or more and less than 0.5 mass%, and the logarithmic viscosity number is 2.5 dL/g or more and 6.0 dL/g or less. By means of this configuration, it is possible to further suppress an increase in the viscosity of the slurry of the electrode composition, and to provide an electrode having sufficient flexibility in which electrode breakage is not likely to occur.

[Second Vinylidene Fluoride Polymer]

Preferred forms of the other monomers in the second vinylidene fluoride polymer are as described above. By means of including a structural unit derived from vinylidene fluoride, a structural unit derived from HFP, and a structural unit containing a polar functional group, it is possible to provide an electrode having sufficient flexibility in which electrode breakage is not likely to occur.

When the structural unit derived from HFP is included in the second vinylidene fluoride polymer, the proportion of the structural unit derived from HFP in the total structural units of the second vinylidene fluoride polymer is 6 mass% or more, and preferably 6.5 mass% or more. In addition, the proportion of the structural unit is 40 mass% or less, and preferably 20 mass% or less. If the proportion of the structural units is within the above range, it is possible to further suppress an increase in the viscosity of the slurry of the electrode composition, and to provide an electrode having sufficient flexibility in which electrode breakage is not likely to occur.

The logarithmic viscosity number of the second vinylidene fluoride polymer is 0.5 dL/g or more, preferably 1.0 dL/g or more. In addition, the logarithmic viscosity number is less than 2.5 dL/g, preferably 2.3 dL/g or less. If the logarithmic viscosity number is within the above range, it is possible to further suppress an increase in the viscosity of the slurry of the electrode composition, and to provide an electrode having sufficient flexibility in which electrode breakage is not likely to occur.

With respect to the second vinylidene fluoride polymer, the proportion of the structural unit derived from HFP in the total structural units of the second vinylidene fluoride polymer is 6 mass% or more and 40 mass% or less, and the logarithmic viscosity number is 0.5 dL/g or more and less than 2.5 dL/g. As a result, it is possible to further suppress an increase in the viscosity of the slurry of the electrode composition, and to provide an electrode having sufficient flexibility in which electrode breakage is not likely to occur.

The ratio A1735 cm$^{-1}$/A3025 cm$^{-1}$ of the absorbance A1735 cm$^{-1}$ of an IR spectrum at 1735 cm$^{-1}$ to the absorbance A3025 cm$^{-1}$ of an IR spectrum at 3025 cm$^{-1}$ of the second vinylidene fluoride polymer is 0.20 or more, preferably 0.25 or more. In addition, A1735 cm$^{-1}$/A3025 cm$^{-1}$ is 0.80 or less, preferably less than 0.4. By means of the ratio of the absorbances being within the above range, an increase in the viscosity of the slurry of the electrode composition can be suppressed.

The mass ratio (second vinylidene fluoride polymer/first vinylidene fluoride polymer) of the second vinylidene fluoride polymer to the first vinylidene fluoride polymer in the mixed adhesive is 3/7 or more, preferably 4/6. In addition, the mass ratio is 7/3 or less. By means of the mass ratio of the second vinylidene fluoride polymer to the first vinylidene fluoride polymer being within the above range, it is possible to further suppress an increase in the viscosity of the slurry of the electrode composition, and to provide an electrode having sufficient flexibility in which electrode breakage is not likely to occur.

The form of the adhesive of the present embodiment is not particularly limited, and may be a powder or a liquid.

<Electrode Composition>

The electrode composition of the present embodiment includes the adhesive of the present embodiment, a positive electrode active material, and a conductive aid.

(Positive Electrode Active Material)

As a positive electrode active material, a lithium composite metal oxide is typically used. Examples of the lithium composite metal oxide may include: $LiMnO_2$, $LiMn_2O_4$, $LiCoO_2$, $LiNiO_2$, $LiNi_xCo_{1-x}O_2$ (0 < x < 1), $LiNi_xCo_yMn_{1-x-y}O_2$ (0 < x < 1, 0 < y < 1), $LiNi_xCo_yAlZO_2$ (0.55 ≤ x < 1, 0 < y2 < 0.55, 0 < z < 0.55, and x/(x+y+z) ≥ 0.55), $Li_xNi_{1-y}M_yO_2$, $LiFePO_4$, $LiFe_xMn_{1-x}PO_4$ (0.05 ≤ x ≤ 0.40, 1-x ≥ 0), and the like.

The average particle diameter Dv50 of the positive electrode active material is 6.0 μm or less. Within this numerical range, an electrode having high flexibility can be obtained. The average particle diameter Dv50 refers to a particle diameter at which a particle size cumulative percentage is 50% in a particle size cumulative graph based on volume. The particle size cumulative graph can be produced in accordance with JISK 1474.

(Conductive Aid)

A conductive aid is a substance added for the purpose of improving the conductivity of the electrode composition layer when an active material having low electron conductivity such as $LiCoO_2$ is used. As the conductive aid, carbon materials such as carbon black, carbon nanotubes, graphene, graphite fine powder, and graphite fiber, and metal fine powder or metal fiber such as nickel and aluminum can be used, for example.

(Other Components)

The electrode composition of the present embodiment may also include a solvent such as a non-aqueous solvent. Examples of the non-aqueous solvent may include: N-methylpyrrolidone, N,N-dimethylformamide, N,N-dimethylacetamide, dimethyl sulfoxide, hexamethylphosphoramide, dioxane, tetrahydrofuran, tetramethylurea, triethyl phosphate, trimethyl phosphate, acetone, ethyl acetate, n-butyl acetate, n-butanol, dipropylene glycol monomethyl ether, propylene glycol monomethyl ether acetate, cyclohexanone, and the like. These solvents may be used singly or in a combination of two or more.

In addition, examples of other components with respect to the electrode composition according to the present embodiment may include: pigment dispersants such as polyvinylpyrrolidone, dispersion stabilizers, and the like.

The amount of the vinylidene fluoride polymer included in the electrode composition is preferably 0.2 to 15 parts by mass, more preferably 0.5 to 10 parts by mass, when the amount of the positive electrode active material is taken as 100 parts by mass.

(Preparation of Electrode Composition)

With respect to the electrode composition, as long as, for example, the adhesive of the present embodiment, an electrode active material, and a solvent may be mixed to form a uniform slurry, the order of mixing is not particularly limited. For example, the electrode active material may be added to the adhesive, and then the solvent may be added thereto, followed by stirring and mixing to obtain the electrode composition. In addition, the electrode active material may be dispersed in the solvent, and the adhesive may be added thereto, followed by stirring and mixing to obtain the electrode composition. Alternatively, the solvent may be added to the adhesive, and then the electrode active material may be added thereto, followed by stirring and mixing to obtain the electrode composition. In addition, the mixing may be carried out in multiple times, and for example, secondary mixing may be performed.

<Electrode>

The electrode of the present embodiment has: a current collector; and an electrode composition layer formed by forming the electrode composition of the present embodiment on two surfaces of the current collector. Unless otherwise specified, the term "electrode" in the present description and the like refers to an electrode of a battery in which an electrode composition layer formed from the electrode composition of the present embodiment is formed on a current collector.

(Current Collector)

The current collector is a substrate of an electrode and is a terminal for extracting electricity. Examples of the material of the current collector may include iron, stainless steel, steel, copper, aluminum, nickel, titanium, and the like. The current collector is preferably in the form of foil or mesh.

(Electrode Composition Layer)

The electrode composition layer is a layer obtained by coating an electrode composition as a slurry onto a current collector and drying it. As a method for coating the electrode composition, methods known in the art can be used, and examples thereof may include a method using a knife coater, an extrusion coater, a transfer coater, or the like. The drying temperature for forming the electrode composition layer is preferably 50°C to 170°C, and more preferably 50°C to 150°C. The electrode composition layer may be formed on two surfaces of the current collector, or may be formed on only one surface thereof.
The thickness of the electrode composition layer on each single surface is usually 20 to 600 $\mu$m, preferably 20 to 350 $\mu$m. In addition, the electrode composition layer may be pressed to increase the density. In addition, the surface density of the electrode composition layer on both surfaces is usually 20 to 700 g/m$^2$, preferably 30 to 600 g/m$^2$.
From the aspect of increasing the capacity of batteries such as non-aqueous electrolyte secondary batteries, the thickness of the electrode is preferably 150 $\mu$m or more, and more preferably 170 $\mu$m or more. In addition, the thickness of the electrode is preferably 270 $\mu$m or less, and more preferably 220 $\mu$m or less.
The electrode of the present embodiment can be preferably used as a positive electrode of a non-aqueous electrolyte secondary battery such as a lithium-ion secondary battery.

<Non-aqueous Electrolyte Secondary Battery>

The non-aqueous electrolyte secondary battery of the present embodiment is provided with the electrode of the present embodiment. Other members in the non-aqueous electrolyte secondary battery are not particularly limited, and, for example, conventionally used members can be used. With respect to one form of the non-aqueous electrolyte secondary battery, same has a structure of a cylindrical battery as follows: a power generation element formed by winding in a vortex a laminate in which a separator is configured between a positive electrode and a negative electrode is accommodated in a metal casing. As another form of the non-aqueous electrolyte secondary battery, a non-aqueous electrolyte secondary battery having another shape such as a coin shape, a square shape, or a paper shape can be used.
Examples of a method for producing a non-aqueous electrolyte secondary battery may include: a method in which a negative electrode layer and a positive electrode layer are laminated with a separator interposed therebetween, the laminate is placed in a cell container, and an electrolyte solution is injected into the cell container, followed by sealing.

<Summary>

The adhesive according to the present embodiment is an adhesive that contains at least one vinylidene fluoride polymer and satisfies the following requirements (A) to (E): (A) the turbidity at 25°C of an N-methylpyrrolidone solution including 5 mass% of the adhesive is 5.0 or less; (B) the dissolution rate of the adhesive represented by the following formula (1) in an adhesive solution obtained by dosing 6 parts by mass of the adhesive to 94 parts by mass of a 95 mass% acetone aqueous solution and stirring at 30°C for 2 h is 10% or more and 70% or less; (C) the logarithmic viscosity number of a dissolved component of the adhesive solution is 0.5 dL/g or more and less than 2.5 dL/g; (D) the ratio A1735 cm$^{-1}$/A3025 cm$^{-1}$ of the absorbance A1735 cm$^{-1}$ of an infrared absorption spectrum at 1735 cm$^{-1}$ to the absorbance A3025 cm$^{-1}$ of an infrared absorption spectrum at 3025 cm$^{-1}$ of the dissolved component of the adhesive solution is 0.20 or more and 0.80 or less; and (E) the logarithmic viscosity number of the adhesive is greater than that of the dissolved component of the adhesive solution.

dissolution rate (%) = ((amount dosed - mass of undissolved matter)/amount dosed) x 100

In addition, with respect to the adhesive of the present embodiment, it is preferable that same has at least one crystallization peak (Tc) in each of a range of 85°C or more and less than 125°C and a range of 125°C or more and 150°C or less when a first cooling measurement is performed using a differential scanning calorimeter under a condition of 10°C/min.

In addition, with respect to the adhesive of the present embodiment, it is preferable that the proportion of a structural unit derived from hexafluoropropylene is 3 mass% or more and 15 mass% or less when the total structural units of the vinylidene fluoride polymer contained in the adhesive are taken as 100 mass%, and that the proportion of a structural unit derived from hexafluoropropylene contained in the dissolved component of the adhesive solution is 5 mass% or more and 40 mass% or less when the total structural units of the vinylidene fluoride polymer contained in the dissolved component of the adhesive solution are taken as 100 mass%.

With respect to the adhesive according to the present embodiment, same preferably contains: a first vinylidene fluoride polymer having a structural unit derived from vinylidene fluoride as a main component and optionally including a structural unit derived from hexafluoropropylene; and a second vinylidene fluoride polymer including a structural unit derived from vinylidene fluoride, a structural unit derived from hexafluoropropylene, and a structural unit containing a polar functional group. The first vinylidene fluoride polymer has a logarithmic viscosity number of 2.5 dL/g or more and 6.0 dL/g or less, and the content of the structural unit derived from hexafluoropropylene in the total structural units of the first vinylidene fluoride polymer is 0 mass% or more and less than 0.5 mass%. The second vinylidene fluoride polymer has a logarithmic viscosity number of 0.5 dL/g or more and less than 2.5 dL/g, and the content of the structural unit derived from hexafluoropropylene in the total structural units of the second vinylidene fluoride polymer is 6 mass% or more and 40 mass% or less. The ratio A1735 $cm^{-1}$/A3025 $cm^{-1}$ of the absorbance A1735 $cm^{-1}$ of an infrared absorption spectrum at 1735 $cm^{-1}$ to the absorbance A3025 $cm^{-1}$ of an infrared absorption spectrum at 3025 $cm^{-1}$ of the second vinylidene fluoride polymer is 0.20 or more and 0.80 or less. The mass ratio (second vinylidene fluoride polymer/first vinylidene fluoride polymer) of the second vinylidene fluoride polymer to the first vinylidene fluoride polymer in the adhesive is 3/7 or more and 7/3 or less.

The electrode composition of the present embodiment is an electrode composition as follows: the electrode composition includes the adhesive according to the present embodiment, a positive electrode active material, and a conductive aid, and the average particle diameter Dv50 of the positive electrode active material is 6.0 μm or less.

The electrode of the present embodiment is an electrode as follows: the electrode has: a current collector; and an electrode composition layer formed by forming the electrode composition of the present embodiment on two surfaces of the current collector.

The non-aqueous electrolyte secondary battery including the electrode of the present embodiment can achieve a high capacity. Then, by using the non-aqueous electrolyte secondary battery which is highly safe and can be used for a long period of time, popularization of electric vehicles (EVs) can be promoted, thereby helping to reduce $CO_2$ emissions. In addition, by conserving resources and reducing greenhouse gas emissions, it can be expected that global warming can be alleviated and industrial foundations and technologies can be innovated. This makes it possible to contribute to the achievement of sustainable development goals (SDGs).

Examples are shown below to further describe embodiments of the present invention in detail. Of course, the present invention is not limited to the following examples, and the details may take various forms. Moreover, the present invention is not limited to the above-described embodiments, and various modifications can be made within the scope of the claims, and embodiments obtained by appropriately combining technical means respectively disclosed in different embodiments are also included in the technical scope of the present invention. In addition, all documents recited in the present description are incorporated herein by reference.

Examples

In the following examples, % means mass% unless otherwise specified.

[Preparation Example 1] Preparation of VDF/HFP/MMM copolymer

1027 g of ion-exchanged water, 0.8 g of Metolose SM-100 (manufactured by Shin-Etsu Chemical Co., Ltd.), 7.08 g of 50% diisopropyl peroxydicarbonate/freon HFE-347pc-f solution, 344 g of vinylidene fluoride (VDF), 54 g of hexafluoropropylene (HFP), and 1.99 g of monomethyl maleate (MMM) were loaded into an autoclave having an internal capacity of 2 liters, and heated to 29°C. The obtained polymer slurry was dehydrated and dried to obtain a vinylidene fluoride copolymer (VDF/HFP/MMM). Hereinafter, the 50% diisopropyl peroxydicarbonate/freon HFE-347pc-f solution is referred to as solution A.

[Preparation Example 2] Preparation of VDF/HFP/MMM copolymer

1072 g of ion-exchanged water, 0.62 g of Metolose SM-100 (manufactured by Shin-Etsu Chemical Co., Ltd.), 2.66 g of solution A, 311 g of VDF, 103 g of HFP, and 2.08 g of MMM were loaded into an autoclave having an internal capacity of 2 liters, and heated to 29°C. The obtained polymer slurry was dehydrated and dried to obtain a vinylidene fluoride copolymer (VDF/HFP/MMM).

[Preparation Example 3] Preparation of VDF homopolymer

7614.5 g of ion-exchanged water, 1.755 g of Metolose SM-100, 9.83 g of solution A, and 3509 g of VDF were loaded into an autoclave having an internal capacity of 14 liters, and the temperature was adjusted to 26°C. The obtained polymer slurry was dehydrated and dried to obtain a vinylidene fluoride homopolymer (pVDF).

[Preparation Example 4] Preparation of VDF/HFP Polymer

1100.8 g of ion-exchanged water, 0.22 g of Metolose SM-100 (manufactured by Shin-Etsu Chemical Co., Ltd.), 1.85 g of solution A, 374 g of VDF, and 0.61 g of HFP were loaded into an autoclave having an internal capacity of 2 liters, and heated to 43°C. The obtained polymer slurry was dehydrated and dried to obtain a vinylidene fluoride copolymer (VDF/HFP).

[Preparation Example 5] Preparation of VDF homopolymer

7614.5 g of ion-exchanged water, 1.755 g of Metolose SM-100, 6.32 g of solution A, and 3509 g of VDF were loaded into an autoclave having an internal capacity of 14 liters, and the temperature was adjusted to 26°C. The obtained polymer slurry was dehydrated and dried to obtain pVDF.

[Preparation Example 6] Preparation of VDF/HFP/MMM copolymer

1054 g of ion-exchanged water, 0.62 g of Metolose SM-100 (manufactured by Shin-Etsu Chemical Co., Ltd.), 3.49 g of solution A, 374 g of VDF, 40 g of HFP, and 2.08 g of MMM were loaded into an autoclave having an internal capacity of 2 liters, and heated to 29°C. The obtained polymer slurry was dehydrated and dried to obtain a vinylidene fluoride copolymer (VDF/HFP/MMM).

[Preparation Example 7] Preparation of VDF/HFP/MMM copolymer

1061 g of ion-exchanged water, 0.62 g of Metolose SM-100, 1.65 g of solution A, 370 g of VDF, 41 g of HFP, and 1.24 g of MMM were loaded into an autoclave having an internal capacity of 2 liters, and heated to 29°C. The obtained polymer slurry was dehydrated and dried to obtain a vinylidene fluoride copolymer (VDF/HFP/MMM).

[Preparation Example 8] Preparation of VDF/HFP/MMM copolymer

1188 g of ion-exchanged water, 0.44 g of Metolose SM-100, 3.96 g of solution A, 418 g of VDF, 22 g of HFP, and 2.42 g of MMM were loaded into an autoclave having an internal capacity of 2 liters, and heated to 43°C. The obtained polymer slurry was dehydrated and dried to obtain a vinylidene fluoride copolymer (VDF/HFP/MMM).

[Preparation Example 9] Preparation of VDF homopolymer

1153.6 g of ion-exchanged water, 2.06 g of perfluorooctanoic acid (PFOA), a small amount of ethyl acetate, and 103 g of VDF were added into an autoclave having an internal capacity of 2 liters. After heating to 80°C, 2.06 g of ammonium persulfate was added for polymerization, 309 g of VDF was further added, and the obtained polymer slurry was dehydrated and dried to obtain a vinylidene fluoride polymer (pVDF).

[Preparation Example 10] Preparation of VDF/HFP/MMM copolymer

1060 g of ion-exchanged water, 0.63 g of Metolose SM-100, 2.35 g of solution A, 391 g of VDF, 20 g of HFP, and 0.78 g of MMM were loaded into an autoclave having an internal capacity of 2 liters, and heated to 29°C. The obtained polymer slurry was dehydrated and dried to obtain a vinylidene fluoride copolymer (VDF/HFP/MMM).

[Preparation Example 11] Preparation of VDF/HFP/MMM copolymer

1060.7 g of ion-exchanged water, 0.63 g of Metolose SM-100, 2.35 g of solution A, 391 g of VDF, 20 g of HFP, and 0.41 g of MMM were loaded into an autoclave having an internal capacity of 2 liters, and heated to 29°C. The obtained polymer slurry was dehydrated and dried to obtain a vinylidene fluoride copolymer (VDF/HFP/MMM).

[Preparation Example 12] Preparation of VDF/HFP/AA copolymer

1071.2 g of ion-exchanged water, 0.58 g of Metolose SM-100, 3.5 g of solution A, 82 g of VDF, and 41 g of HFP were added into an autoclave having an internal capacity of 2 liters. After heating to 45°C, 289 g of VDF and 2.06 g of acrylic acid (AA) were further added. Here, AA was used in the form of a 5 mass% aqueous solution, and the AA aqueous solution was added at 3.4 g/h. The obtained polymer slurry was dehydrated and dried to obtain a vinylidene fluoride copolymer (VDF/HFP/AA).

[Preparation Example 13] Preparation of VDF/HFP/MMM copolymer

1061 g of ion-exchanged water, 0.62 g of Metolose SM-100, 2.27 g of solution A, 391 g of VDF, 19 g of HFP, and 1.03 g of MMM were loaded into an autoclave having an internal capacity of 2 liters, and heated to 29°C. The obtained polymer slurry was dehydrated and dried to obtain a vinylidene fluoride copolymer (VDF/HFP/MMM).

[Example 1] Preparation of adhesive and electrode composition and production of electrode

The first vinylidene fluoride polymer and the second vinylidene fluoride polymer shown in Table 1 were mixed at a ratio (mass ratio) shown in Table 2 to obtain an adhesive. The vinylidene fluoride polymer prepared in Preparation Example 1 was used as the second vinylidene fluoride polymer. #4300 is a vinylidene fluoride homopolymer (suspension polymerization) manufactured by Kureha Corporation.

The above adhesive was dissolved in N-methyl-2-pyrrolidone (hereinafter referred to as NMP) to produce a vinylidene fluoride polymer solution including 6 mass% of a vinylidene fluoride copolymer. Then, a CNT (carbon tube) dispersion (an NMP mixed solution including 4.3 mass% of MWCNT having a tube diameter of 7 nm and a specific surface area of 300 $m^2/g$) as a conductive aid and NMP were added to the polymer solution, and primary mixing was carried out. Next, lithium iron phosphate (LFP) as a positive electrode active material having a Dv50 shown in Table 4 was added so that the solid content concentration was 50%. Then, secondary mixing was carried out for 5 min at 2000 rpm, thereby obtaining an electrode composition. The mass ratio of the positive electrode active material, the CNT, and the vinylidene fluoride polymer in the obtained electrode composition was sequentially 100:2:3.

The obtained electrode composition was coated onto two surfaces of an aluminum sheet having a thickness of 15 μm using a TH-C-type coater manufactured by Thank-Metal Co., Ltd., to produce an electrode of which the single-surface surface density of the electrode composition in a dry state is about 190 $g/m^2$.

[Examples 2 to 7] Preparation of adhesive and electrode composition and production of electrode

The first vinylidene fluoride polymer and the second vinylidene fluoride polymer shown in Table 1 were mixed at a ratio (mass ratio) shown in Table 2 to obtain an adhesive. The vinylidene fluoride polymers prepared in Preparation Examples 2 to 6 were used as the second vinylidene fluoride polymer of Example 2, the first vinylidene fluoride polymer of Example 3, the first vinylidene fluoride polymer of Example 4, the first vinylidene fluoride polymer of Example 7, and the second vinylidene fluoride polymer of Example 7, respectively. The vinylidene fluoride polymer prepared in Preparation Example 1 was used as the second vinylidene fluoride polymer in Examples 3 to 6.

In addition, electrode compositions were prepared using LFP having the Dv50s shown in Table 4 in the same order as Example 1. Then, an electrode was produced using each of the prepared electrode compositions. The electrode produced in Example 6 had a single-surface surface density of about 210 $g/m^2$.

[Comparative Examples 1 to 8 and Reference Example 1] Preparation of adhesive and electrode composition and production of electrode

The first vinylidene fluoride polymer and the second vinylidene fluoride polymer shown in Table 1 were mixed at a ratio (mass ratio) shown in Table 2 to obtain an adhesive. The vinylidene fluoride polymers prepared in Preparation Examples 9, 10, 11, 5, and 13 were used as the first vinylidene fluoride polymers in Comparative Examples 3 and 5 to 8, respectively. The vinylidene fluoride polymers prepared in Preparation Examples 7 and 12 were used as the second vinylidene fluoride polymers of Comparative Examples 1 and 7, respectively. The vinylidene fluoride polymer prepared in Preparation Example 8 was used as the second vinylidene fluoride polymer in Comparative Examples 2 and 6, and the vinylidene fluoride polymer prepared in Preparation Example 1 was used as the second vinylidene fluoride polymer in Comparative Examples 3 and 4 and Reference Example 1. No second vinylidene fluoride polymer was used in Comparative Examples 5 and 8.

#1300 is a vinylidene fluoride homopolymer (suspension polymerization) manufactured by Kureha Corporation.

In addition, electrode compositions were prepared using LFP having the Dv50s shown in Table 4 in the same order as Example 1. The mass ratios of the positive electrode active material, the CNT, and the vinylidene fluoride polymer in the electrode compositions obtained in Example 7 and Comparative Examples 7 and 8 were sequentially 100:2:2.5.

Then, an electrode was produced using each of the prepared electrode compositions.

[Evaluation Example 1] Measurement of logarithmic viscosity number ($\eta_i$) of vinylidene fluoride polymer

A polymer solution was produced by dissolving 80 mg of vinylidene fluoride polymer in 20 mL of N,N-dimethylformamide. The viscosity $\eta$ of the produced polymer solution was measured in a thermostatic bath at 30°C using an Ubbelohde viscometer. Then, the logarithmic viscosity number ($\eta_i$) was calculated according to the following equation.

$$\eta_i = (1/C) \cdot \ln(\eta/\eta_0)$$

where $\eta_0$ is the viscosity of the solvent N,N-dimethylformamide, and C is 0.4 g/dL.

[Evaluation Example 2] Measurement of HFP amount in vinylidene fluoride copolymer

About 40 mg of a PVDF sample and about 750 $\mu$L of DMSO-d6 as a solvent were added and stirred at 600 rpm for about 30 min at 40°C using a magnetic stirrer. The dissolved sample was transferred into a 5 mm NMR measurement tube, and $^{19}$F NMR measurement was performed using AVANCE-400 manufactured by Bruker Corporation. The ratio (mol ratio) of HFP to VDF in the case in which the total of the introduced amounts of VDF and HFP was taken as 100 mol% was calculated according to the integral ratio of each peak area when the peak area of the internal standard was taken as 6.

In addition, $^1$H NMR measurement was performed in the same manner as the $^{19}$F NMR measurement, and the ratio (mol ratio) of MMM to VDF in the case that the total of the introduced amounts of VDF and MMM was taken as 100 mol% was calculated based on the integrated intensities of a signal observed at 4.19 ppm that is mainly derived from a monomer containing a polar functional group and signals observed at 2.24 ppm and 2.87 ppm that are mainly derived from vinylidene fluoride.

The composition ratio of VDF/HFP/MMM in the vinylidene fluoride copolymer was calculated according to the ratio of HFP to VDF obtained by the $^{19}$F NMR measurement and the ratio of MMM to VDF obtained by the $^{19}$F NMR measurement, and then the introduced amount [mol%] of each composition when the total of the introduced amounts of VDF, HFP, and MMM was taken as 100 mol% was found. The mass [g] of each composition was calculated by multiplying the obtained introduced amount [mol] of each composition by the molar mass [g/mol].

In addition, the HFP amount [mass%] was found according to formula (2).

$$\text{HFP amount [mass\%]} = (\text{HFP mass}/(\text{HFP mass} + \text{VDF mass} + \text{MMM mass})) \times 100 \ldots\ldots(2)$$

[Evaluation Example 3] Measurement of absorbance ratio of second vinylidene fluoride polymer

The second vinylidene fluoride copolymer was hot-pressed at 200°C to be formed into a film of 30 mm x 30 mm. The IR spectrum of each film was found in a range of 1500 cm$^{-1}$ to 4000 cm$^{-1}$ using an infrared spectrophotometer FT-IR500 (manufactured by JASCO Corporation). Then, the ratio (A1735 cm$^{-1}$/A3025 cm$^{-1}$) between the absorbance (A1735 cm$^{-1}$) of the IR spectrum at 1735 cm$^{-1}$ and the absorbance (A3025 cm$^{-1}$) of the IR spectrum at 3025 cm$^{-1}$ was found.

[Evaluation Example 4] Measurement of crystallization peak (Tc) by using differential scanning calorimetry (DSC) of adhesive

10 mg of the adhesive was sealed in an aluminum pan for DSC, and measured in a nitrogen atmosphere. The measurement was performed under the following conditions using DSC-1 manufactured by METTLER TOLEDO.

<Measurement Conditions>

First heating: the temperature was increased from 30°C to 230°C at a rate of 10°C per minute.

(After reaching 230°C, 230°C was maintained for 10 min)

First cooling: the temperature was lowered from 230°C to 30°C at a rate of 10°C per minute.

(After reaching 30°C, 30°C was maintained for 10 min)

Second heating: the temperature was increased from 30°C to 230°C at a rate of 10°C per minute.
After the measurement, the peak temperature of the crystallization peak detected in the first cooling process was taken as Tcx ($x \geq 1$).

[Evaluation Example 5] Measurement of turbidity of adhesive

Each adhesive was added to NMP so as to become 5 mass%, and the mixture was heated and stirred at 50°C to produce a 5% by mass NMP solution. The produced 5 mass% NMP solution was stirred at 25°C, and immediately after the stirring was stopped, the turbidity was measured by integrating sphere-type photoelectric photometry.

[Evaluation Example 6] Evaluation of adhesive solution

12 g of an adhesive was added to 188 g of acetone including 5% water (a 95 mass% acetone aqueous solution), and a stirring treatment was implemented for 2 h using a magnetic stirrer heated to 30°C, thereby obtaining an adhesive solution. Then, filtration treatment was implemented to separate undissolved matter from a dissolved solution. The solvent contained in the undissolved matter was removed by drying, and the mass of the undissolved matter was measured. Then, the dissolution rate of the adhesive solution was found according to the following formula (1).

dissolution rate (%) = ((amount of dosing - mass of undissolved matter)/amount of dosing) x 100

The solvent was removed by means of heating from the solution from which the undissolved matter had been removed to obtain a precipitated polymer (a dissolved component of the adhesive solution). Then, the amount of HFP in the obtained precipitated polymer and the absorbance ratio (A1735 cm$^{-1}$/A3025 cm$^{-1}$) were measured by the same procedure as in Evaluation Examples 2 and 3.

[Evaluation Example 7] Measurement of average particle diameter Dv50 of positive electrode active material

0.1 g of a dispersant (a cationic surfactant "SN WET 366" (manufactured by SAN NOPCO Ltd.)) was added to 0.01 g of the LFP sample, such that the dispersing agent was fused to the sample. Next, 20 mL of pure water was added and the sample was dispersed for about 5 min by using an ultrasonic cleaner, and then a particle diameter distribution in a range of 0.1 to 1000 μm was found by using a particle diameter distribution measurement apparatus (manufactured by MICROTRAC Inc.: MT3300EXII). It should be noted that, a dispersion medium was set as pure water, and the refractive index of the dispersion medium was 1.333. The particle diameter at which the cumulative frequency was 50% on a volume basis was calculated from the obtained particle diameter distribution, and Dv50 was found.

[Evaluation Example 8] Measurement of Slurry Viscosity of Electrode Composition

The slurry viscosity of the electrode composition was measured at 25°C using a B-type viscometer ("DVS+" manufactured by Brookfield). A certain amount of the slurry was put in a plastic tube (Polytube) having a diameter of 1.2 cm, and the slurry which was left to stand and stored at 25°C and a humidity of 10% or less was used as a measurement sample. In this measurement, No. 64 was used as a spindle, and the viscosity at the point in time of stirring at 6 rpm for 30 sec after pre-stirring at a rotating speed of 0.5 rpm for 1 min and then pre-stirring at 1 rpm for 2 min was taken as the slurry viscosity (mPa · s). The viscosity measurement was performed immediately after the production of the sample and at the point in time of 24 h from the start of standing and storage.

[Evaluation Example 9] Measurement of breakage density of electrode

Each electrode was cut to a length of 5 cm x 2 cm to produce an unpressed electrode sample. In addition, each of unpressed electrode samples was pressed using a roll press under the conditions of 0.4 m/min and a linear pressure of 1 t/cm to produce a pressed electrode sample having an electrode composition density of 2.25 g/cm$^3$. The pressed electrode samples each having an electrode density of 2.25 g/cm$^3$ were connected to each other using double-sided tape in such manner that short sides of the test pieces did not overlap, to form a cylindrical shape. The cylindrical sample was crushed at a compression rate of 30 mm/min. Then, the electrode was opened, and a bent portion was visually confirmed. For an electrode in which light transmission was confirmed, it was determined that electrode breakage occurred. For an electrode in which light transmission was not confirmed, it was determined that electrode breakage did not occur.

The details of the first vinylidene fluoride polymer and the second vinylidene fluoride polymer used in each Example, Comparative Example, and Reference Example are shown in Table 1. In Table 1, $\eta_i$ represents the logarithmic viscosity number (dL/g) of each vinylidene fluoride polymer. The HFP amount represents the proportion (mass%) of a structural unit derived from HFP in the total structural units of each vinylidene fluoride polymer. IR represents A1735 cm$^{-1}$/A3025 cm$^{-1}$. It should be noted that the logarithmic viscosity number of the first vinylidene fluoride polymer of Comparative Example 3 could not be measured.

[Table 1]

| | First Vinylidene Fluoride Polymer | | | Second Vinylidene Fluoride Polymer | | | |
|---|---|---|---|---|---|---|---|
| | Type | $\eta_i$ [dL/g] | HFP amount [mass%] | Type | $\eta_i$ [dL/g] | HFP amount [mass%] | IR |
| Example 1 | #4300 | 3.1 | 0 | Preparation Example 1 | 1.4 | 10.6 | 0.30 |
| Example 2 | #4300 | 3.1 | 0 | Preparation Example 2 | 1.5 | 20.1 | 0.40 |
| Example 3 | Preparation Example 3 | 3.5 | 0 | Preparation Example 1 | 1.4 | 10.6 | 0.30 |
| Example 4 | Preparation Example 4 | 3.0 | 0.1 | Preparation Example 1 | 1.4 | 10.6 | 0.30 |
| Example 5 | #4300 | 3.1 | 0 | Preparation Example 1 | 1.4 | 10.6 | 0.30 |
| Example 6 | #4300 | 3.1 | 0 | Preparation Example 1 | 1.4 | 10.6 | 0.30 |
| Example 7 | Preparation Example 5 | 4.2 | 0 | Preparation Example 6 | 2.1 | 6.9 | 0.28 |
| Comparative Example 1 | #1300 | 1.3 | 0 | Preparation Example 7 | 3.0 | 6.9 | 0.18 |
| Comparative Example 2 | #4300 | 3.1 | 0 | Preparation Example 8 | 1.4 | 3.7 | 0.27 |
| Comparative Example 3 | Preparation Example 9 | * | 0 | Preparation Example 1 | 1.4 | 10.6 | 0.30 |
| Comparative Example 4 | #4300 | 3.1 | 0 | Preparation Example 1 | 1.4 | 10.6 | 0.30 |
| Comparative Example 5 | Preparation Example 10 | 2.8 | 3.5 | - | - | - | 0 |
| Comparative Example 6 | Preparation Example 11 | 3.1 | 3.5 | Preparation Example 8 | 1.4 | 3.6 | 0.27 |

(continued)

| | First Vinylidene Fluoride Polymer | | | Second Vinylidene Fluoride Polymer | | | |
|---|---|---|---|---|---|---|---|
| | Type | $\eta_i$ [dL/g] | HFP amount [mass%] | Type | $\eta_i$ [dL/g] | HFP amount [mass%] | IR |
| Comparative Example 7 | Preparation Example 5 | 4.2 | 0 | Preparation Example 12 | 2.1 | 5.7 | 0.84 |
| Comparative Example 8 | Preparation Example 13 | 3.2 | 3.2 | - | - | - | 0 |
| Reference Example 1 | #4300 | 3.1 | 0 | Preparation Example 1 | 1.4 | 10.6 | 0.30 |

The evaluation results of the adhesives obtained in each Example, Comparative Example, and Reference Example are shown in Table 2. In Table 2, "first polymer/second polymer" represents the ratio (mass ratio) of the first vinylidene fluoride polymer to the second vinylidene fluoride polymer in the adhesive. $\eta_i$ represents the logarithmic viscosity number (dL/g) of the adhesive. The logarithmic viscosity number is a value calculated based on the logarithmic viscosity number of each vinylidene fluoride polymer measured in Evaluation Example 1 and the ratio of the first polymer/the second polymer in the adhesive.

In Table 2, the HFP amount is the proportion (mass%) of a structural unit derived from HFP relative to the total structural units of the vinylidene fluoride polymer contained in the adhesive. The HFP amount is a value calculated based on the HFP amount in each vinylidene fluoride copolymer measured in Evaluation Example 2 and the ratio of the first polymer/the second polymer in the adhesive.

In Table 2, Tc1 is the peak temperature of a change in calorific value accompanying crystallization detected on the low-temperature side in the differential scanning calorimetry curve obtained in the first cooling. Tc2 is the peak temperature of a change in calorific value accompanying crystallization detected on the high-temperature side in the differential scanning calorimetry curve obtained in the first cooling. Tc1 was not detected in Comparative Examples 4 to 6 and Comparative Example 8.

[Table 2]

| | Adhesive | | | | | |
|---|---|---|---|---|---|---|
| | First polymer/Second polymer | $\eta_i$ [dL/g] | HFP amount [mass%] | DSC | | Turbidity |
| | | | | Tc1 [°C] | Tc2 [°C] | |
| Example 1 | 66/34 | 2.5 | 3.6 | 116 | 141 | 0.7 |
| Example 2 | 66/34 | 2.5 | 6.8 | 92 | 143 | 3.9 |
| Example 3 | 66/34 | 2.8 | 3.6 | 115 | 142 | 0.1 |
| Example 4 | 66/34 | 2.5 | 3.6 | 123 | 144 | 0.1 |
| Example 5 | 34/66 | 2.0 | 7.0 | 115 | 141 | 0.4 |
| Example 6 | 66/34 | 2.5 | 3.6 | 116 | 141 | 0.7 |
| Example 7 | 50/50 | 3.2 | 3.5 | 119 | 143 | 0.3 |
| Comparative Example 1 | 50/50 | 2.2 | 3.5 | 121 | 137 | 0.1 |
| Comparative Example 2 | 66/34 | 2.5 | 1.3 | 130 | 141 | 0.7 |
| Comparative Example 3 | 66/34 | * | 3.6 | 117 | 129 | 5.1 |
| Comparative Example 4 | 95/5 | 3.0 | 0.5 | - | 143 | 0.9 |
| Comparative Example 5 | 100/- | 2.8 | 3.5 | - | 130 | 0.1 |
| Comparative Example 6 | 80/20 | 2.8 | 3.5 | - | 130 | 0.1 |
| Comparative Example 7 | 50/50 | 3.2 | 2.9 | 115 | 144 | 0.1 |
| Comparative Example 8 | 100/- | 3.2 | 3.2 | - | 130 | 0.1 |

(continued)

| | Adhesive | | | | | |
|---|---|---|---|---|---|---|
| | First polymer/Second polymer | $\eta_i$ [dL/g] | HFP amount [mass%] | DSC | | Turbidity |
| | | | | Tc1 [°C] | Tc2 [°C] | |
| Reference Example 1 | 66/34 | 2.5 | 3.6 | 116 | 141 | 0.7 |

The evaluation results of the adhesive solutions obtained in each Examples, Comparative Example, and Reference Example and the dissolved components of the adhesive solutions are shown in Table 3.

[Table 3]

| | Adhesive solution | | | |
|---|---|---|---|---|
| | Dissolution rate [%] | Dissolved component of adhesive solution | | |
| | | $\eta_i$ [dL/g] | HFP amount [mass%] | IR |
| Example 1 | 34 | 1.38 | 9.7 | 0.30 |
| Example 2 | 35 | 1.52 | 17.8 | 0.34 |
| Example 3 | 34 | 1.40 | 9.7 | 0.30 |
| Example 4 | 34 | 1.38 | 9.7 | 0.30 |
| Example 5 | 66 | 1.38 | 9.7 | 0.30 |
| Example 6 | 34 | 1.38 | 9.7 | 0.30 |
| Example 7 | 50 | 2.00 | 6.1 | 0.28 |
| Comparative Example 1 | 43 | 3.00 | 7.3 | 0.16 |
| Comparative Example 2 | 7 | 1.32 | 6.0 | 0.30 |
| Comparative Example 3 | 34 | 1.38 | 9.7 | 0.30 |
| Comparative Example 4 | 5 | 1.38 | 9.7 | 0.30 |
| Comparative Example 5 | 4 | 1.98 | 4.0 | 0.20 |
| Comparative Example 6 | 7 | 1.85 | 4.4 | 0.12 |
| Comparative Example 7 | 50 | 2.10 | 5.6 | 0.82 |
| Comparative Example 8 | 2 | 1.97 | 4.4 | 0.17 |
| Reference Example 1 | 34 | 1.38 | 9.7 | 0.30 |

The evaluation results of the electrode compositions and electrodes obtained in each Example, Comparative Example, and Reference Example are shown in Table 4. In Table 4, the slurry viscosity is the viscosity immediately after production of the sample. In addition, increase in viscosity (%) represents the rate of increase in slurry viscosity after standing for 24 h, which is calculated according to the following formula. In addition, "too large" means that the viscosity of the slurry after standing and storing for 24 h was 100,000 mPa · s (upper limit of measurement) or more. The unit of electrode density is $g/cm^3$, the unit of surface density is $g/m^2$, and the unit of electrode thickness is $\mu m$.

Increase in viscosity (%) = slurry viscosity after standing for 24 h/slurry viscosity immediately after sample production x 100

[Table 4]

| | Dv50 of active material | Slurry | | Electrode density (single surface) [g/cm³] | Surface density (single surface) [g/m²] | Electrode composition | Electrode |
| | | | | | | Thickness of electrode (two surfaces) [μm] | Electrode breakage |
| | | Viscosity [mPa · s] | Increase in viscosity [%] | | | | |
|---|---|---|---|---|---|---|---|
| Example 1 | 2 μm | 6355 | 396 | 2.25 | 190 | 184 | No breakage |
| Example 2 | 2 μm | 4965 | 418 | 2.25 | 190 | 184 | No breakage |
| Example 3 | 2 μm | 8341 | 357 | 2.25 | 190 | 184 | No breakage |
| Example 4 | 1 μm | 6355 | 362 | 2.25 | 190 | 184 | No breakage |
| Example 5 | 1 μm | 8738 | 376 | 2.25 | 190 | 184 | No breakage |
| Example 6 | 1 μm | 6355 | 396 | 2.25 | 210 | 201 | No breakage |
| Example 7 | 1 μm | 9533 | 412 | 2.35 | 190 | 177 | No breakage |
| Comparative Example 1 | 2 μm | 13703 | Too large | 2.25 | 190 | 184 | Breakage |
| Comparative Example 2 | 2 μm | 7547 | 402 | 2.25 | 190 | 184 | Breakage |
| Comparative Example 3 | 1 μm | 29194 | Too large | 2.25 | 190 | 184 | No breakage |
| Comparative Example 4 | 1 μm | 5958 | 322 | 2.25 | 190 | 184 | Breakage |
| Comparative Example 5 | 2 μm | 26612 | Too large | 2.25 | 190 | 184 | Breakage |
| Comparative Example 6 | 2 μm | 12115 | Too large | 2.25 | 190 | 184 | Breakage |
| Comparative Example 7 | 1 μm | 37535 | Too large | 2.35 | 190 | 177 | Breakage |
| Comparative Example 8 | 1 μm | 18867 | Too large | 2.35 | 190 | 177 | Breakage |
| Reference Example 1 | 8 μm | 9930 | 294 | 2.25 | 190 | 184 | Breakage |

<Results>

As shown in Table 4, with respect to the electrode compositions obtained by the adhesives of Examples 1 to 7 satisfying the above requirements (A) to (E), an increase in the viscosity of the slurry was suppressed. In addition, it can be seen that even if the electrodes obtained using the electrode compositions have a sufficient thickness, no breakage was observed, and the electrodes have flexibility that can withstand bending.

In the case in which the adhesive including the first vinylidene fluoride polymer having a low HFP amount and the second vinylidene fluoride polymer having a high HFP amount was dissolved in a 95 mass% acetone aqueous solution, the second vinylidene fluoride polymer having a high HFP amount was dissolved. Therefore, the dissolved component of the adhesive solution corresponds to the second vinylidene fluoride polymer.

The dissolution rates of the adhesive solutions of Comparative Examples 2 and 6 were less than 10%. This may be considered to be because the HFP amount in the second vinylidene fluoride polymer was less than 6 mass%. In addition, regardless of the HFP amount of the first vinylidene fluoride polymer and the content of the first vinylidene fluoride polymer in the adhesive, the HFP amount of the second vinylidene fluoride polymer needs to be 6 mass% or more.

The first vinylidene fluoride polymer of Comparative Example 3 is a polymer obtained by emulsion polymerization. The turbidity of the adhesive including the polymer exceeded 5.0, and the increase in viscosity of the slurry of the electrode composition became too large.

The adhesives of Comparative Examples 5 and 8 are only the first vinylidene fluoride polymer. Even when the HFP amount in the first vinylidene fluoride polymer was increased, the dissolution rate of the adhesive solution was less than 10%. In Comparative Examples 5 and 8, the increase in viscosity of the slurry of the electrode composition was too large, and breakage of the electrode was observed. These results show that: The presence of a dissolved component (second vinylidene fluoride polymer) of the adhesive solution is necessary.

In addition, it can be seen that when the dissolution rate of the adhesive solution was less than 10%, no crystallization peak was observed in a range of 85°C or more and less than 125°C in the DSC analysis.

The adhesives of Examples 1 to 7 are all an adhesive of a first vinylidene fluoride polymer (low HFP amount, high logarithmic viscosity number) and a second vinylidene fluoride polymer (high HFP amount, low logarithmic viscosity number). However, as will be understood by those skilled in the art according to the above evaluation examples and the like, when the electrode composition contains one vinylidene fluoride polymer that satisfies the above requirements (A) to (E), an increase in slurry viscosity is suppressed. Further, those skilled in the art can also understand according to the evaluation examples that the electrode obtained by using the electrode composition has flexibility.

Industrial Applicability

The present invention can be used in a non-aqueous electrolyte secondary battery.


**Claims**

1. An adhesive, containing at least one vinylidene fluoride polymer, the adhesive satisfying the following requirements (A) to (E):

   (A) the turbidity at 25°C of an N-methylpyrrolidone solution comprising 5% by mass of the adhesive is 5.0 or less;
   (B) the dissolution rate of the adhesive represented by the following formula (1) in an adhesive solution obtained by dosing 6 parts by mass of the adhesive to 94 parts by mass of a 95 mass% acetone aqueous solution and stirring at 30°C for 2 h is 10% or more and 70% or less;

   dissolution rate % = ((amount dosed - mass of undissolved matter)/amount of dosed) x 100

   (C) the logarithmic viscosity number of a dissolved component of the adhesive solution is 0.5 dL/g or more and less than 2.5 dL/g;
   (D) the ratio A1735 cm$^{-1}$/A3025 cm$^{-1}$ of the absorbance A1735 cm$^{-1}$ of an infrared absorption spectrum at 1735 cm$^{-1}$ to the absorbance A3025 cm$^{-1}$ of an infrared absorption spectrum at 3025 cm$^{-1}$ of the dissolved component of the adhesive solution is 0.20 or more and 0.80 or less; and
   (E) the logarithmic viscosity number of the adhesive is greater than that of the dissolved component of the adhesive solution.

2. The adhesive according to claim 1, wherein,
   the adhesive has at least one crystallization peak Tc in each of a range of 85°C or more and less than 125°C and a range of 125°C or more and 150°C or less when a first cooling measurement is performed using a differential scanning calorimeter under a condition of 10°C/min.

3. The adhesive according to claim 1, wherein,

   the proportion of a structural unit derived from hexafluoropropylene is 3 mass% or more and 15 mass% or less when the total structural units of the vinylidene fluoride polymer contained in the adhesive are taken as 100 mass%, and

the proportion of a structural unit derived from hexafluoropropylene contained in the dissolved component of the adhesive solution is 5 mass% or more and 40 mass% or less when the total structural units of the vinylidene fluoride polymer contained in the dissolved component of the adhesive solution are taken as 100 mass%.

4. An adhesive, containing:

a first vinylidene fluoride polymer having a structural unit derived from vinylidene fluoride as a main component and optionally comprising a structural unit derived from hexafluoropropylene, and
a second vinylidene fluoride polymer comprising a structural unit derived from vinylidene fluoride, a structural unit derived from hexafluoropropylene, and a structural unit containing a polar functional group, wherein
the logarithmic viscosity number of the first vinylidene fluoride polymer is 2.5 dL/g or more and 6.0 dL/g or less, and the content of the structural unit derived from hexafluoropropylene in the total structural units of the first vinylidene fluoride polymer is 0 mass% or more and less than 0.5 mass%,
the logarithmic viscosity number of the second vinylidene fluoride polymer is 0.5 dL/g or more and less than 2.5 dL/g, and the content of the structural unit derived from hexafluoropropylene in the total structural units of the second vinylidene fluoride polymer is 6 mass% or more and 40 mass% or less,
the ratio A1735 $cm^{-1}$/A3025 $cm^{-1}$ of the absorbance A1735 $cm^{-1}$ of an infrared absorption spectrum at 1735 $cm^{-1}$ to the absorbance A3025 $cm^{-1}$ of an infrared absorption spectrum at 3025 $cm^{-1}$ of the second vinylidene fluoride polymer is 0.20 or more and 0.80 or less, and
the mass ratio of the second vinylidene fluoride polymer to the first vinylidene fluoride polymer in the adhesive, i.e., second vinylidene fluoride polymer/first vinylidene fluoride polymer, is 3/7 or more and 7/3 or less.

5. An electrode composition, comprising the adhesive as defined in any one of claims 1 to 4, a positive electrode active material, and a conductive aid, wherein
the average particle diameter Dv50 of the positive electrode active material is 6.0 $\mu$m or less.

6. An electrode, comprising:

a current collector; and
an electrode composition layer formed by forming the electrode composition according to claim 5 on two surfaces of the current collector.

## INTERNATIONAL SEARCH REPORT

| International application No. |
|---|
| **PCT/CN2021/142111** |

**A. CLASSIFICATION OF SUBJECT MATTER**

H01M 4/62(2006.01)i; H01M 4/13(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 浆料, 增粘, 浊度, 偏氟乙烯, 比浓对数粘度, 抑制, slurry, tackifying, turbidity, vinylidene Fluoride, inherent viscosity, inhibit+

**C. DOCUMENTS CONSIDERED TO BE RELEVANT**

| Category* | Citation of document, with indication, where appropriate, of the relevant passages | Relevant to claim No. |
|---|---|---|
| A | CN 112088457 A (KUREHA CORP.) 15 December 2020 (2020-12-15) entire document | 1-6 |
| A | CN 104137311 A (ZEON CORP.) 05 November 2014 (2014-11-05) entire document | 1-6 |
| A | CN 112585211 A (KUREHA CORP.) 30 March 2021 (2021-03-30) entire document | 1-6 |
| A | JP 2013235698 A (HITACHI VEHICLE ENERGY LTD.) 21 November 2013 (2013-11-21) entire document | 1-6 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 September 2022** | **14 September 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/142111**

| Patent document cited in search report | | | Publication date (day/month/year) | Patent family member(s) | | | Publication date (day/month/year) |
|---|---|---|---|---|---|---|---|
| CN | 112088457 | A | 15 December 2020 | KR | 20200141530 | A | 18 December 2020 |
| | | | | WO | 2019230219 | A1 | 05 December 2019 |
| | | | | JP | WO2019230219 | A1 | 17 December 2020 |
| | | | | KR | 2260002 | B1 | 02 June 2021 |
| | | | | JP | 6891346 | B2 | 18 June 2021 |
| CN | 104137311 | A | 05 November 2014 | WO | 2013129658 | A1 | 06 September 2013 |
| | | | | US | 2015050555 | A1 | 19 February 2015 |
| | | | | JP | 2018200889 | A | 20 December 2018 |
| | | | | KR | 20140142694 | A | 12 December 2014 |
| | | | | JP | WO2013129658 | A1 | 30 July 2015 |
| | | | | EP | 2822067 | A1 | 07 January 2015 |
| | | | | JP | 2017143075 | A | 17 August 2017 |
| | | | | HU | E045037 | T2 | 30 December 2019 |
| | | | | PL | 2822067 | T3 | 29 November 2019 |
| | | | | EP | 2822067 | A4 | 16 December 2015 |
| | | | | CN | 104137311 | B | 11 May 2016 |
| | | | | KR | 101762604 | B1 | 28 July 2017 |
| | | | | US | 10033042 | B2 | 24 July 2018 |
| | | | | JP | 6390744 | B2 | 19 September 2018 |
| | | | | EP | 2822067 | B1 | 24 April 2019 |
| | | | | JP | 6569788 | B2 | 04 September 2019 |
| CN | 112585211 | A | 30 March 2021 | EP | 3851490 | A1 | 21 July 2021 |
| | | | | JP | 2020041065 | A | 19 March 2020 |
| | | | | WO | 2020054273 | A1 | 19 March 2020 |
| | | | | EP | 3851490 | A4 | 27 October 2021 |
| | | | | JP | 7044673 | B2 | 30 March 2022 |
| JP | 2013235698 | A | 21 November 2013 | JP | 5932471 | B2 | 08 June 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012090876 A